Europäisches Patentamt

European Patent Office

Office européen des brevets

(19)

(11) Publication number: **0 019 451**
**B1**

(12) **EUROPEAN PATENT SPECIFICATION**

(45) Date of publication of patent specification: **08.02.84**

(21) Application number: **80301564.3**

(22) Date of filing: **13.05.80**

(51) Int. Cl.³: **C 09 J  5/10, B 32 B  7/06, F 16 L  59/02**

(54) Composite pressure sensitive adhesive construction and method using same.

(30) Priority: **14.05.79 US  38679**

(43) Date of publication of application:
**26.11.80 Bulletin 80/24**

(45) Publication of the grant of the patent:
**08.02.84 Bulletin 84/6**

(84) Designated Contracting States:
**AT BE CH DE FR GB IT LI NL SE**

(56) References cited:
**FR - A - 1 491 066**
**US - A - 4 022 248**
**US - A - 4 157 410**

(73) Proprietor: **MORGAN ADHESIVES COMPANY**
**4560 Darrow Road**
**Stow Ohio 44224 (US)**

(72) Inventor: **McClintock, Jack M.**
**P.O. Box 1485**
**Stow, Ohio 44224 (US)**

(74) Representative: **Abbie, Andrew Kenneth et al,**
**A.A. THORNTON & CO. Northumberland House**
**303/306 High Holborn**
**London, WC1V 7LE (GB)**

Courier Press, Leamington Spa, England.

## Composite pressure sensitive adhesive constructions and methods using same

This invention relates to a composite pressure sensitive adhesive constructions and methods of using same for adhering a first item to a second item.

Heretofore, various articles or methods have been utilized to join items together. One of the most common articles or methods has been the use of staples, paste, glue, and more recently, pressure sensitive tapes. However, often it is highly desirable to temporarily hold the items together. This renders the use of paste and glue impossible in that any separation after the paste and glue have been applied results in the destruction of a portion of the article. Similarly, the removal of staples will often tear a portion of the article.

Considering pressure sensitive adhesives, various techniques have been utilized and they generally are cumbersome, expensive, and result in a poor quality seal. For example, in the bonding or sealing together of two pieces of material such as the two cover edges of a pipe insulating jacket, paste or glue is highly undesirable in that the edges must first be cleaned, the paste applied, and the edges then held together for a period of time while the paste or glue dries. In addition to this, the installation is often in a very difficult work area, such as a ceiling, which requires an individual operating at the top of a high ladder.

One current method utilizing pressure sensitive adhesives involves a double face coated tape, that is, a tape system having a carrier, adhesive layers applied to both sides of the carrier, and release liners applied to the adhesive layers. One of the release liners would normally be removed so that the tape could be attached to one edge of the jacket or to the item. Upon installation, the remaining release liner would be removed and the adhesive contacted with the other edge. However, this method generally resulted in poor adhesion in that the remaining edge usually acquired dust, dirt, grease, and the like, either during warehousing, shipment, or installation.

Another system utilized heretofore is commonly called the "two-tape" method. According to this system, each tape contained a carrier having an adhesive layer on each side thereof. To each adhesive layer was added a release liner. One of the adhesive faces on each tape was added to each edge of the material either at the factory or on the job. If added on the job, the same problems set forth above were encountered in that the edges would be dirty, greasy, or the like, thus a good bond of the tape generally was not obtained. Furthermore, an exact registration was difficult to obtain since the on-the-job application often involved working under difficult conditions. If one of the adhesive layers on each of the two tapes was applied to each edge during factory installation, a temporary bond of each edge to each other was not obtained, since, of course, the two remaining release layers would not adhere to each other. Thus, the item such as an insulated coolant or steam pipe jacket would freely open and was subject to abuse, damage, and the like, and further required the need to remove two liners.

It is an object of the present invention to provide a composite pressure sensitive adhesive construction which allows a temporary bond to be made between two items prior to the formation of a permanent bond.

This is achieved in accordance with the invention, by effecting a temporary bond utilising a composite pressure sensitive adhesive construction having a plurality of layers comprising at least first and second pressure sensitive adhesive layers having a central release liner interposed therebetween and releasably attached thereto, whereby after removal of the central release liner a permanent bond can be effected by contacting the pressure sensitive adhesive layers together.

The invention includes a method for adhering a first item to a second item, comprising providing a temporary bond between the items utilising a composite pressure sensitive adhesive construction having a plurality of layers comprising at least first and second pressure sensitive adhesive layers having a central release liner interposed therebetween and releasably attached thereto, whereby after removal of the central release liner a permanent bond can be effected between the items by contacting the first and second pressure sensitive adhesive layers together, wherein at least one layer of the composite pressure sensitive adhesive construction is applied to the first item, at least one other layer thereof is applied to the second item, and the layers applied to said first and second items are thereafter secured together to form said composite pressure sensitive adhesive construction.

The invention also includes a method for adhering a first item to a second item, comprising providing said first item with a composite pressure sensitive adhesive construction which is securable to said second item after removal of an external release liner from the pressure sensitive adhesive construction to effect a temporary bond between said items, said composite pressure sensitive adhesive construction having a plurality of layers comprising, in addition to said external release liner, at least first and second pressure sensitive adhesive layers having a central release liner interposed therebetween and releasably attached thereto whereby after removal of the central release liner a permanent bond can be effected between the items by contacting the first and second pressure sensitive adhesives layers together, wherein at least one layer of the pressure sensitive adhesive construction is applied to the first item prior to other layers thereof being secured thereto.

The invention also includes a composite pressure sensitive adhesive construction, comprising a central release liner interposed between and releasably attached to first and second pressure sensitive adhesive layers on first and second carrier cushion liners, said first carrier cushion liner being permanently secured by means of an adhesive layer to an item and said second carrier cushion liner being secured by means of a further adhesive layer to a second item or to an external relase liner.

In order that the invention may be well understood, some embodiments thereof which are given by way of example only, will now be described with reference to the accompanying drawings, in which:

Fig. 1 is a plan view of a pipe insulation jacket having a composite pressure sensitive adhesive construction joining two ends of the insulating jacket cover with a temporary bond;

Figure 2 is a plan view showing the insulation jacket in an open position with a pipe in one section thereof, an exposed pressure sensitive adhesive layer to one longitudinal end portion of the cover and the partial removal of a central release liner thereby exposing another pressure sensitive adhesive layer on the remaining longitudinal end portion of the cover;

Figure 3 is a plan view showing the insulation jacket in a closed position about a pipe wherein one longitudinal end portion of the cover has been permanently bonded to the other longitudinal portion of the cover through the pressure sensitive adhesive layers;

Figure 4 is an enlarged fragmentary view showing the composite pressure sensitive adhesive construction as attached to the two ends of the jacket cover;

Figure 5 is an enlarged fragmentary view showing another embodiment of a composite pressure sensitive adhesive construction as attached to the two ends of the jacket cover;

Figure 6 is an enlarged fragmentary view showing a composite pressure sensitive adhesive construction as attached to one end of the jacket cover; and

Figure 7 is an enlarged fragmentary view showing another embodiment of a pressure sensitive adhesive construction as attached to one end of the jacket cover.

In the embodiments, a composite pressure sensitive adhesive construction is provided temporarily joining one item to another until a permanent bond is desired. The pressure sensitive adhesive construction has a central release liner with a pressure sensitive adhesive layer releasably attached to each side thereof.

When a permanent bond is desired, the central release liner is removed, thereby exposing the sides of the adhesive layers which are then bonded together through the application of pressure. In other embodiments, a carrier layer with an adhesive layer on one side thereof may be added to the original adhesive layer existing on each side of the central release layer. The application of such a construction to an item or article is similar as in the formation of a permanent bond. Such an embodiment provides bulk or a cushioned construction which is often desirable.

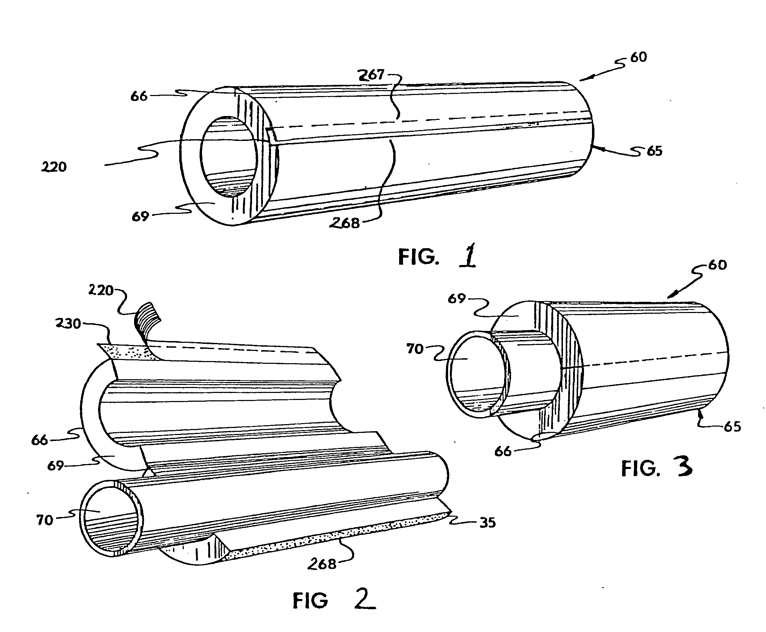

Figures 1 to 4 show a typical application of a composite pressure sensitive adhesive construction to an article, generally indicated by the numeral 60. In the specific application shown in Figures 1 and 3, adhesive construction has been applied to a specific article in the form of an insulating pipe jacket, generally indicated by the numeral 65 and comprising an insulating portion 69 provided with a cover 66 which has one longitudinal end or side 267 which is attached to the other longitudinal end or side 268 through the pressure sensitive adhesive construction. Cover 66 may be made of any conventional material such as Kraft paper or any plastic material such as polyvinylchloride, polyethylene, nylon and polyurethane. Additionally, depending upon the use of the particular material, cover 66 may also function, for example as a vapour barrier or a liquid barrier.

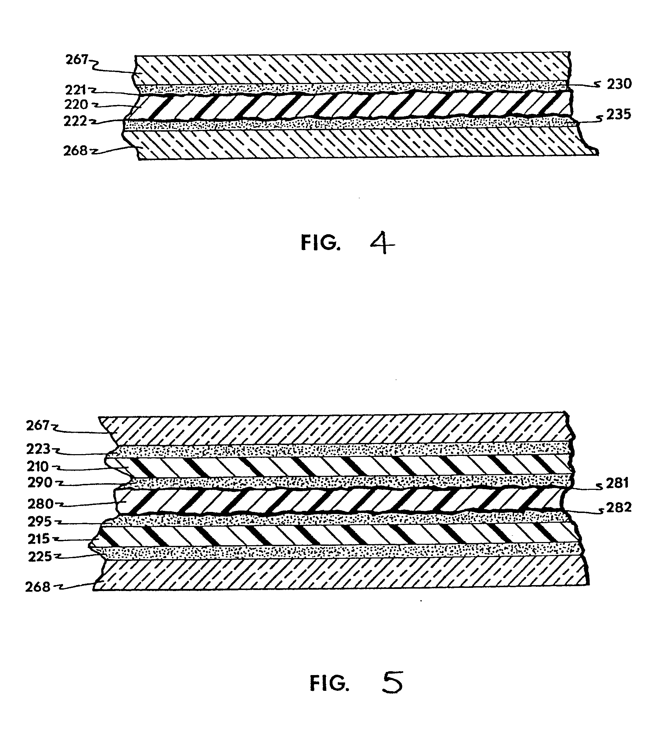

As best shown in Figure 4 a pressure sensitive adhesive layer 230 is applied directly to the longitudinal end or side 267 of a cover 66 of the insulating pipe jacket 65. Likewise, a pressure sensitive adhesive layer 235 is applied to the opposed longitudinal end or side 268 of the jacket cover 66. In order to effect a temporary seal during storage, the central release layer 220 is interposed between pressure sensitive adhesive layers 230 and 235. On both sides of central release layer 220 are release coatings 221 and 222 which permit the removal of central release layer 220 at the appropriate time from the adhesive layers 230 and 235.

At such time when the installation shall occur, the separation of the pipe jacket at release coating 221 or 222 facilitates the removal of central release layer 220 (as shown in Figure 2) and the interaction of pressure sensitive adhesive layers 230 and 235 to form a permanent bond (as shown in Figure 3) once the jacket has been positioned on pipe 70.

Alternatively, as shown in Figure 5, a central release layer 280 having release coatings 281 and 282 separate pressure sensitive adhesive layers 290 and 295 from sealing permanently.

These adhesive layers 290 and 295 differ from the adhesive layers 223 and 225 firmly secured to longitudinal ends or sides 267 or 268, respectively, in that carrier cushion layers 210 and 215 are interposed to provide a cushioned composite pressure sensitive adhesive construction.

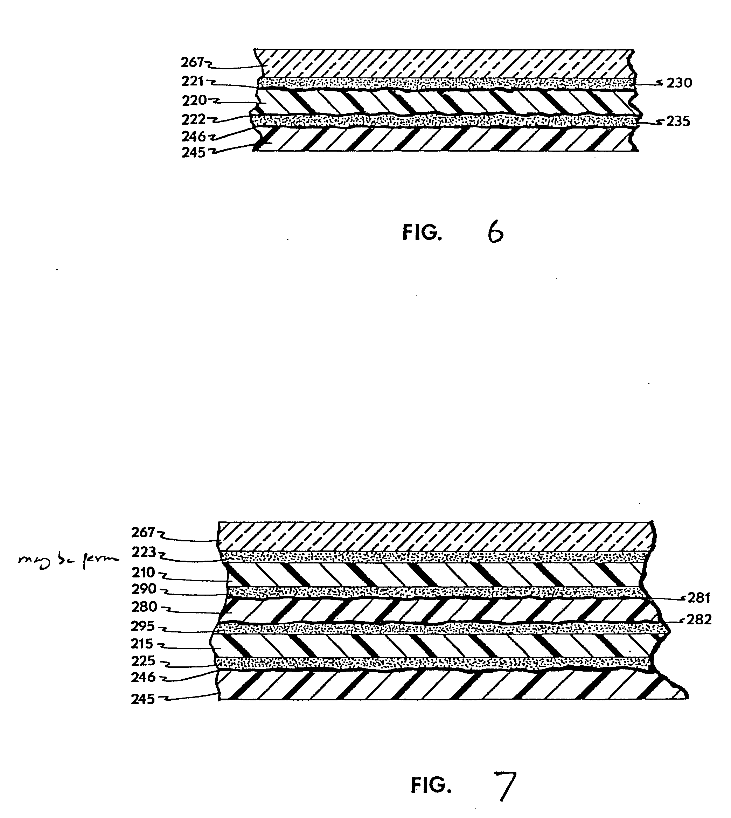

A variation of the embodiments expressed in Figures 4 and 5 are shown in Figures 6 and 7. The embodiment in Figure 6 differs from the embodiment in Figure 4 in that, rather than secure pressure sensitive adhesive layers 230 and 235 directly to both longitudinal ends or sides 267 or 268, respectively, one external release liner 245 having release coating 246 is provided on one side of adhesive layer 235, and adhesive layer 230 is secured to longitudinal end or side 267. Therefore, rather than have both adhesive layers 230 and 235 attached to the longitudinal sides 267 and 268 of the jacket, one end is detached therefrom in order that the storage of the jackets need not be done in a cylindrical form. Figure 6 differs from Figure 7, in that a single release layer 220 having release coatings 221 and 222 is interposed between adhesive layers 230 and 235 in the former. In the latter, a central release layer 280 having release coatings 281 and 282 has pressure sensitive adhesive layers 290 and 295, carrier cushion layers 210 and 215 and pressure sensitive adhesive layers 223 and 225. The additional layers 210, 215, 290 and 295 provide the additional cushioned composite effect which has been analogously described above with reference to the embodiments in Figure 5.

In the embodiments the central release liner 220, 280 and the external release liner 245 when provided may vary in thickness from $\frac{1}{2}$ mil (0.0127 mm) to 5 or 6 mils (0.127 or 0.152 mm) or higher with thicknesses in excess of this range generally being impracticable due to cost and flexibility. A desirable thickness, in most instances, is from 1 to 4 mils (0.0254 to 0.1016 mm) and preferably 3 to 4 mils (0.0762 to 0.1016 mm) when utilized in connection with a pipe jacket. Various common materials and/or films may be utilized for central release liner 220, 280 such as Super Calendered Kraft Paper, polyethylene-coated paper, polyethylene film, polyester films, polyvinyl films and polypropylene films. The thickness of release coatings applied to the liners 220, 280, 245 is very small and theoretically need only be a molecule thick so long as the liner is substantially covered. Hence, such release coatings are generally applied by Rotogravure printing or Mayer rod coating, and are barely measureable, that is, generally being well under 1/10 of a mil (0.00254 mm). Generally any release coating may be utilized such as a silicone coating. Release coating layers 221, 281 and 222, 282 may be the same material or may be slightly different types of material to affect a tighter release on one side of the central release liner 220, 280 with an easier release on the other side thereof, that is, a differential release. Such a differential release is preferred so that upon opening of composite construction at central release liner 220, 280, the construction will open at the easier release coating such as, for example, coating 221, 281 and the adjacent adhesive layer 230, 290.

The pressure sensitive adhesive layers residing upon each side of the central release liners in the embodiment are generally the same, although they may be different in order to effect a better bond to a specific type of item. Pressure sensitive adhesive layers 230, 235, 290, 295 generally vary in thickness ranging from 1/2 mil (0.0127 mm) to 4 mils (0.1016 mm) with a desirable thickness ranging from 1 mil (0.0254 mm) to 2 mils (0.0508 mm). A preferred thickness is about 1 1/2 mils (0.381 mm). Of course, larger thicknesses can always be used but tend to be uneconomical. Common or conventional pressure sensitive-type adhesives well known to those skilled in the art may be utilized such as an adhesive containing an acrylic base, which may be formulated to any specific purpose e.g. contain flame retardant additives. Another common class is that of the rubber-based adhesives which may also be formulated with regard to specific purposes and/or uses and, hence, e.g. contain dyes or antioxidants. A specific example of a rubber-based pressure sensitive adhesive is a blend of styrene-butadiene rubber and polyisoprene, and at least a suitable conventional tackifier. Adhesive layers 230, 235 and 290, 295 may be applied to central release liners 222, 280 in any common or conventional manner such as through calendering or coating.

In the embodiments shown in Figures 5 and 7 the carrier layers 210, 215 may be made out of a matted, a non-woven, or a fibre material as well as a film. If a film is utilized, it generally may be the same type of material as used in the release liner. However, a soft or cushioned layer is generally preferred and such layers are preferably made out of fibres of polyester, matted polyester fibres, polyvinylchloride film, polyethylene film or a polyolefin film having from 3 to 8 carbon atoms in the repeating unit. The thickness of this carrier layer generally ranges from 1/2 mil (0.0127 mm) to 5 mils (0.127 mm) with a desirable range being from 2 mils (0.0508 mm) to 4 mils (0.1016 mm). Preferred thickness is about 3 mils (0.0762 mm).

In Figures 4 and 5, the pressure sensitive adhesive layers 230 and 235 or 223 and 225 may be applied to the surface of the jacket pipe 267 or 268 according to any method which will adequately secure and adhere the adhesive to the jacket surface. Because adhesive layers 223 and 225 are permanently placed between carrier layers 210 and 215 and jacket surfaces 267 and 268, the adhesive composition need not be pressure sensitive, but may be any conventional adhesive which permanently secures two materials such as the various structural adhesives which include epoxy, polyurethane, neoprene, nitrile, and silicone-type adhesives. Typically, the application of the adhesive layers to the pipe jacket surfaces may be accomplished by the operations of painting, spraying or rolling, followed by a drying operation. The application of this operation may occur at any point of manufacture prior to storage and the requirements for the interposition of the central release layer 220 or 280 follow the needs of that for other embodiments discussed above.

Alternative forms of construction of the embodiment shown in Figure 5 are available. In the first alternative, the adhesive layer 223 may be applied to the surface 267 of the jacket followed by the application of carrier layer 210, followed by the application of pressure sensitive adhesive layer 290, with the analogous operations occurring for the layers 225, 215 and 295. Then, the central release layer 280 having release coatings 281 and 282 may be applied in an identical manner as that described above with reference to Figure 4.

The second method employs the application of pressure sensitive adhesive layers 223 and 225 to surfaces 267 and 268 of the jacket, followed by application of a sandwich, or intermediate composite construction comprising the constituents of carrier layer 210, pressure sensitive adhesive layer 290, central release layer 280 having release coatings 281 and 282, pressure sensitive adhesive layer 295, and carrier layer 215. This intermediate composite construction, once placed between adhesive layers 223 and 225 completes the installation via the second method.

With reference to Figures 6 and 7, the pressure sensitive adhesive layers 230 and 235 or 223 and 225 may be applied to the surface of the pipe jacket 267 or 268 as has been demonstrated with the embodiments illustrated in Figures 4 and 5. Because the adhesive layer 223 is permanently placed between carrier layer 210 and jacket surface 267 with no further need of separation, any adhesive material commonly used in the art may be employed for securing the carrier layers to the jacket pipe surfaces. Because the adhesive layers may be applied by painting, spraying or rolling, followed by a drying operation, sufficient time must be allocated for these individual operations prior to the time of storage of the pipe jacket for later use. Because the pressure sensitive adhesive layer compositions in Figures 6 and 7 do not require ends 267 and 268 to be joined together during storage, alternative methods of storage may be employed than that found with the cylindrical storage requirements of the other embodiments.

In place of applying adhesive layers 235 and 225 to a longitudinal end or side 268 of the pipe jacket, the external release liner 245 is provided to protect the adhesive layers 235 and 225 from debris and the other physical objects which would harm the pressure sensitive qualities of the layer. The external release liner 245 with release coating 246 on the contact side thereof releasably attaches to pressure sensitive adhesive layers 235 and 225. With reference to Figure 7, two alternative methods of construction are available, similar to that found in the embodiments shown in Figure 5. In the first alternative, layers 223, 210 and 290, liner 280, layers 295, 215, 225, and liner 245 may be applied and secured sequentially in a series of individual processes. The second method employs the application of adhesive layer 223, followed by the securement of an intermediate composite of layers 210 and 290, release liner 280, and layers 295 and 215, followed by application of layer 225 and liner 245. Either process, considering the comparative efficiency of the particular manufacture, may be employed to achieve the same composite pressure sensitive adhesive construction.

After storage, the constructions shown in Figures 6 and 7 are taken to the job site and the external release liner 245 is removed such that pressure sensitive adhesive layers 235 and 225 may contact the surface 268 of the pipe jacket. Then, the central release liners 220 and 280 may be removed and adhesive layers 230 and 235 or 290 and 295 may form a bond completing the installation of the pipe jacket around the pipe.

**Claims**

1. A method for adhering a first item (267) to a second item (268), comprising providing a temporary bond between the items (267, 268) utilizing a composite pressure sensitive adhesive construction having a plurality of layers comprising at least first and second pressure sensitive adhesive layers (230, 235; 290, 295) having a central release liner (220; 280) interposed therebetween and releasably attached thereto, whereby after removal of the central release liner (220; 280) a permanent bond can be effected between the items (267, 268) by contacting the first and second pressure sensitive adhesive layers (230, 235; 290, 295) together, wherein at least one layer (230; 223) of the composite pressure sensitive adhesive construction is applied to the first item (267), at least one other layer (235; 225) thereof is applied to the second item (268), and the layers applied to said first and second items (267, 268) are thereafter secured together to form said composite pressure sensitive adhesive construction.

2. A method as claimed in claim 1, wherein said first pressure sensitive adhesive layer (230) is applied to said first item (267), said second pressure sensitive adhesive layer (235) is applied to said second item (268) and thereafter said central release liner (220) is interposed between and releasably attached to said first and second pressure sensitive adhesive layers (230, 235).

3. A method as claimed in claim 1, wherein a third adhesive layer (223) is applied to said first item (267), a first carrier cushion layer (210) is secured to said third adhesive layer (223) and said first pressure sensitive adhesive layer (290) is applied to said first carrier cushion layer (210); wherein a fourth adhesive layer (225) is applied to said second item (268), a second carrier cushion layer (215) is secured to said fourth adhesive layer (225) and said second pressure sensitive adhesive layer (295) is applied to said second carrier cushion layer (215); and wherein said central release liner (280) is interposed between and releasably attached to said first and second pressure sensitive adhesive layers (290, 295).

4. A method as claimed in claim 1, wherein a third adhesive layer (223) is applied to said first item (267), a fourth adhesive layer (225) is applied to said second item (268), and an intermediate composite, which comprises said central release liner (280) interposed between and releasably attached to said first and second pressure sensitive adhesive layers (290, 295) each of which has a respective carrier cushion layer (210, 215) secured thereto, is placed between said third and fourth adhesive layers (223, 225) and said carrier cushion layers (210, 215) are secured to said third and fourth adhesive layers (223, 225).

5. A method as claimed in claim 3 or 4, wherein said third and fourth adhesive layers (223, 225) comprise pressure sensitive adhesive layers.

6. A method as claimed in claim 3 or 4, wherein said third and fourth adhesive layers (223, 225) comprise permanent adhesive layers.

7. A method for adhering a first item (267) to a second item, comprising providing said first item (267) with a composite pressure sensitive adhesive construction which is securable to said second item after removal of an external release liner (245) from the pressure sensitive adhesive construction to effect a temporary bond between said items, said composite pressure sensitive adhesive construction having a plurality of layers comprising, in addition to said external release liner, at least first and second pressure sensitive adhesive layers (230, 235; 290, 295) having a central release liner (220; 280) interposed therebetween and releasably attached thereto whereby after removal of the central release liner (220, 280) a permanent bond can be effected between the items by contacting the first and second pressure sensitive adhesive layers (230, 235; 290, 295) together, wherein at least one layer (230; 223) of the pressure sensitive adhesive construction is applied to the first item (267) prior to other layers thereof being secured thereto.

8. A method as claimed in claim 7, wherein said first pressure sensitive adhesive layer (230) is applied to said first item (267) said second pressure sensitive adhesive layer (235) is applied to said external release liner (245), and thereafter said central release liner (220) is interposed between and releasably attached to said first and second pressure sensitive adhesive layers (230, 235).

9. A method as claimed in claim 7, wherein a third adhesive layer (223) is applied to said first item (267), a first carrier cushion layer (210) is secured to said third adhesive layer (223) and said first pressure sensitive adhesive layer (290) is applied to said first carrier cushion layer (210); wherein a fourth, pressure sensitive adhesive layer (225) is applied to said external release liner (245), a second carrier cushion layer (215) is secured to said fourth, pressure sensitive adhesive layer (225) and said second pressure sensitive adhesive layer (295) is applied to said second carrier cushion layer (215); and wherein said central release liner (280) in interposed between and releasably attached to said first and second pressure sensitive adhesive layers (290, 295).

10. A method as claimed in claim 7, wherein a third adhesive layer (223) is applied to said first item (267), a fourth, pressure sensitive adhesive layer (225) is applied to said external release liner (245), and an intermediate composite, which comprises said central release liner (280) interposed between and releasably attached to said first and second pressure sensitive layer adhesive layers (290, 295) each of which has a respective carrier cushion layer (210, 215) secured thereto, is placed between said third and fourth adhesive layers (223, 225) and said carrier cushion layers (210, 215) are secured to said third and fourth adhesive layers (223, 225).

11. A method as claimed in claim 9 or 10, wherein said third adhesive layer (223) comprises a layer of pressure sensitive adhesive.

12. A method as claimed in claim 9 or 10, wherein said third adhesive layer (223) comprises a permanent adhesive layer.

13. A method as claimed in claim 7, wherein said layers (230, 220, 235, 245; 223, 210, 290, 280, 295, 215, 225, 245) of the pressure sensitive construction are applied sequentially to said first item (267).

14. A method as claimed in any one of claims 7 to 13, wherein said external release liner (245) is removed from said pressure sensitive construction and said pressure sensitive construction is secured to said second item to effect said temporary bond between said items.

15. A method as claimed in any one of claims 1 to 6 or claim 14, wherein said central release liner (220; 280) is removed and said first and second pressure sensitive layers (230, 235; 290, 295) are contacted together to effect said permanent bond.

16. A composite pressure sensitive adhesive construction, comprising a central release liner (280) interposed between and releasably attached to first and second pressure sensitive adhesive layers (290, 295) on first and second carrier cushion liners (210, 215), said first carrier cushion liner (210) being permanently secured by means of an adhesive layer (223) to an item and said second carrier cushion liner (215) being secured by means of a further adhesive layer (225) to a second item (268) or to an external release liner (245).

17. A construction as claimed in claim 16 wherein said second carrier cushion liner (215) is permanently secured to said second item (268) by means of said further adhesive layer (225).

18. A construction as claimed in claim 16 or 17 wherein a release coating (281, 282) is provided on each side of the central release liner (280).

19. A construction as claimed in claim 18, wherein one release coating (281 or 282) on said central release liner (280) has a tighter release than the other coating to provide differential release of the central release liner from said first and second pressure sensitive adhesive layers (290, 295).

**Patentansprüche**

1. Verfahren zum Anheften eines ersten Gegenstands (267) an einen Zweiten Gegenstand (268), bei welchem unter Verwendung eines durch Druck Aktivierbaren Verbund-Klebermaterials, welches eine Anzahl von Schichten aufweist, darunter wenigstens eine erste und eine zweite durch Druck aktivierbare Kleberschicht (230, 235; 290, 295) und eine dazwischen angeordnete und lösbar damit verbundene mittlere Ablöseschicht (220; 280), eine zeitweilige Verbindung zwischen den Gegenständen (267, 268) hergestellt wird und nach Entfernen der mittleren Ablöseschicht (220; 280) eine dauerhafte stoffschlüssige Verbindung zwischen den Gegenständen (267, 268) hergestellt werden kann, indem die erste und die zweite durch Druck aktivierbare Kleberschicht (230, 235; 290, 295) miteinander kontaktiert werden, wobei wenigstens eine Schicht (230; 223) des durch Druck aktivierbaren Verbund-Klebermaterials am ersten Gegenstand (267) angebracht wird, wenigstens eine andere Schicht (235; 225) desselben am zweiten Gegenstand (268) angebracht wird und die an den ersten und zweiten Gegenständen angebrachten Schichten anschließend zusammengefügt werden, um das durch Druck aktivierbare Verbund-Klebermaterial zu bilden.

2. Verfahren nach Anspruch 1, bei welchem die erste durch Druck aktivierbare Kleberschicht (230) am ersten Gegenstand (267) angebracht wird, die zweite durch Druck aktivierbare Kleberschicht (235) am zweiten Gegenstand (268) angebracht wird und danach die mittlere Ablöseschicht (220) zwischen die erste und die zweite durch Druck aktivierbare Kleberschicht (230, 235) eingebracht und lösbar daran befestigt wird.

3. Verfahren nach Anspruch 1, bei welchem eine dritte Kleberschicht (223) am ersten Gegenstand (267) angebracht wird, eine erste Träger- oder Dämpfungsschicht (210) an der dritten Kleberschicht (223) befestigt wird und die erste durch Druck aktivierbare Kleberschicht (290) auf die Träger- oder Dämpfungsschicht (210) aufgebracht wird, wobei eine vierte Kleberschicht (225) auf den zweiten Gegenstand (268) aufgebracht wird, eine zweite Träger- oder Dämpfungsschicht (215) an der vierten Kleberschicht (225) befestigt wird und die zweite durch Druck aktivierbare Kleberschicht (295) auf die zweite Träger- oder Dämpfungsschicht (215) aufgebracht wird, und wobei die mittlere Ablöseschicht (280) zwischen die erste und die zweite durch Druck aktivierbare Kleberschicht (290, 295) eingebracht und lösbar daran befestigt wird.

4. Verfahren nach Anspruch 1, bei welchem eine dritte Kleberschicht (223) auf den ersten Gegenstand (267) aufgebracht wird, eine vierte Kleberschicht (225) auf den zweiten Gegenstand (268) aufgebracht wird und eine mittlere Verbundlage, gebildet aus der zwischen der ersten und der zweiten durch Druck aktivierbaren Kleberschicht (290, 295) angeordneten und lösbar damit verbundenen mittleren Ablöseschicht (280) und jeweils einer an den durch Druck aktivierbaren Kleberschichten angebrachten Träger- oder Dämpfungsschicht (210; 215), zwischen die dritte und die vierte Kleberschicht (223, 225) eingebracht wird, so daß die Träger- oder Dämpfungsschichten (210, 215) an der dritten und der vierten Kleberschicht (223, 225) befestigt werden.

5. Verfahren nach Anspruch 3 oder 4, bei welchem die dritte und die vierte Kleberschicht (223, 225) aus einem durch Druck aktivierbaren Kleber sind.

6. Verfahren nach Anspruch 3 oder 4, bei welchem die dritte und die vierte Kleberschicht (223, 225) aus einem Permanentkleber gebildet sind.

7. Verfahren zum Anheften eines ersten Gegenstands (267) and einen zweiten Gegenstand, bei welchem am ersten Gegenstand (267) ein durch Druck Aktivierbares Verbund-Klebermaterial angebracht wird, welches nach Entfernen einer äußeren Ablöseschicht (245) an zweiten Gegenstand befestigbar ist, um eine zeitweilige stoffschlüssige Verbindung zwischen den Gegenständen herzustellen, wobei das durch Druck aktivierbare Verbund-Klebermaterial eine Anzahl von Schichten zusätzlich zu der äußeren Ablöseschicht aufweist, darunter wenigstens eine erste und eine zweite durch Druck aktivierbare Kleberschicht (230, 235; 290, 295), zwischen denen eine mittlere Ablöseschicht (220; 280) angeordnet und lösbar damit verbunden ist, so daß nach Entfernen der mittleren Ablöseschicht (220; 280) eine dauerhafte stoffschlüssige Verbindung zwischen den Gegenständen herstellbar ist, indem die erste und die zweite durch Druck aktivierbare Kleberschicht (230, 235; 290, 295) miteinander kontaktiert werden, und wobei wenigstens eine Schicht (230; 223) des durch Druck aktivierbaren Verbund-Klebermaterials auf den ersten Gegenstand (267) aufgebracht wird, bevor die anderen Schichten daran befestigt werden.

8. Verfahren nach Anspruch 7, bei welchem die erste durch Druck aktivierbare Kleberschicht (230) am ersten Gegenstand (267) angebracht wird, die zweite durch Druck aktivierbare Kleberschicht (235) an der äußeren Ablöseschicht (245) angebracht wird und die mittlere Ablöseschicht (220) danach zwischen die erste und die zweite durch Druck aktivierbare Kleberschicht (230, 235) eingebracht und lösbar daran befestigt wird.

9. Verfahren nach Anspruch 7, bei welchem eine dritte Kleberschicht (223) auf den ersten Gegenstand (267) aufgebracht wird, eine erste Träger- oder Dämpfungsschicht (210) an der dritten Kleberschicht (223) befestigt wird und die erste durch Druck aktivierbare Kleberschicht (290) auf die erste Träger- oder Dämpfungsschicht (210) aufgebracht wird, während eine vierte, durch Druck aktivierbare, Kleberschicht (225) auf die äußere Ablöseschicht (245) aufgebracht wird, eine zweite Träger- oder Dämpfungsschicht (215) auf die vierte, durch Druck aktivierbare, Kleberschicht (225) aufgebracht wird und die zweite durch Druck aktivierbare Kleberschicht (295) auf die zweite Träger- oder Dämpfungsschicht (215) aufgebracht wird, und wobei die mittlere Ablöseschicht (280) zwischen die ersten und die zweite durch Druck aktivierbare Kleberschicht (290, 295) eingebracht und lösbar daran befestigt wird.

10. Verfahren nach Anspruch 7, bei welchem eine dritte Kleberschicht (223) auf den ersten Gegenstand (267) aufgebracht wird, eine vierte, durch Druck aktivierbare Kleberschicht (225) auf die äußere Ablöseschicht (245) aufgebracht wird und eine Verbund-Zwischenlage, umfassend die mittlere Ablöseschicht (280), welche zwischen der ersten und der zweiten durch Druck aktivierbaren Kleberschicht (290, 295) angeordnet und lösbar daran befestigt ist, und an der ersten und der zweiten durch Druck aktivierbaren Kleberschicht befestigte Träger- oder Dämpfungsschichten (210, 215), zwischen die dritte und die vierte Kleberschicht (223, 225) eingebracht und mit den Träger- oder Dämpfungsschichten (210, 215) und der dritten und vierten Kleberschicht (223, 225) befestigt wird.

11. Verfahren nach Anspruch 9 oder 10, bei welchem die dritte Kleberschicht (223) aus einem durch Druck aktivierbaren Kleber ist.

12. Verfahren nach Anspruch 9 oder 10, bei welchem die dritte Kleberschicht (223) aus einem Permanentkleber gebildet ist.

13. Verfahren nach Anspruch 7, bei welchem die Schichten (230, 220, 235, 245; 223, 210, 290, 280, 295, 215, 225, 245) nacheinander auf den ersten Gegenstand (267) aufgebracht werden.

14. Verfahren nach einem der Ansprüche 7 bis 13, bei welchem die äußere Ablöseschicht (245) von dem durch Druck aktivierbaren Verbund-Klebermaterial entfernt und das durch Druck aktivierbare Verbund-Klebermaterial am zweiten Gegenstand befestigt wird, um die zeitweilige stoffschlüssige Verbindung zwischen den Gegenständen herzustellen.

15. Verfahren nach einem der Anspruch 1 bis 6 oder Anspruch 14, bei welchem die mittlere Ablöseschicht (220; 280) entfernt wird und die erste und die zweite durch Druck aktivierbare Kleberschicht (230, 235; 290, 295) miteinander kontaktiert werden, um die dauerhafte stoffschlüssige Verbindung herzustellen.

16. Durch Druck aktivierbares Verbund-Klebermaterial mit einer mittleren Ablöseschicht (280), welche zwischen einer ersten und einer zweiten, auf einer ersten bzw. einer zweiten Träger- oder Dämpfungsschicht (210, 215) angeordneten, durch Druck aktivierbaren Kleberschicht (290, 295) angeordnet und lösbar daran befestigt ist, wobei die erste Träger- oder Dämpfungsschicht (210) mittels einer Kleberschicht (223) dauerhaft an einem ersten Gegenstand (267) befestigt ist und die zweite Träger- oder Dämpfungsschicht (215) mittels einer weiteren Kleberschicht (225) an einem zweiten Gegenstand (268) oder an einer äußeren Ablöseschicht (245) befestigt ist.

17. Anordnung nach Anspruch 16, bei welchem die zweite Träger- oder Dämpfungsschicht (215) mittels der weiteren Kleberschicht (225) dauerhaft am zweiten Gegenstand (268) befestigt ist.

18. Anordnung nach Anspruch 16 oder 17, bei welcher eine Trennschicht (281, 282) auf jede Seite der mittleren Ablöseschicht (280) aufgebracht ist.

19. Anordnung nach Anspruch 18, bei welcher eine Trennschicht (281 oder 282) auf der mittleren Ablöseschicht (280) ein stärkeres Haftvermögen hat als die andere Trennschicht, so daß ein unterschiedlicher Kraftaufwand zum Ablösen der mittleren Ablöseschicht von der ersten und der zweiten durch Druck Aktivierbaren Kleberschicht (290, 295) notwendig ist.

**Revendications**

1. Procédé de collage d'un premier article (267) sur un second (268), comprenant la formation d'une liaison temporaire entre les articles (267, 268) à l'aide d'une structure composite adhésive sensible à une pression ayant plusieurs couches comprenant au moins une première et une seconde couche adhésive sensible à une pression (230, 235; 290, 295) ayant un revêtement central de séparation (220; 280) placé entre elles et fixé temporairement à elles, si bien que, après enlèvement du revêtement central de séparation (220; 280), une liaison permanente peut être effectuée entre les articles (267, 268) par mise en contact de la première et de la seconde couche adhésive sensible à une pression (230, 235; 290, 295) l'une avec l'autre, une couche au moins (230; 223) de la structure composite adhésive sensible à une pression étant appliquée sur le premier article (267), une autre couche au moins (235; 225) de la structure étant appliquée sur le second article (268), et les couches appliquées sur le premier et le second article (267, 268) étant ensuite fixées l'une à l'autre afin que l'ensemble forme la structure composite adhésive sensible à la pression.

2. Procédé selon la revendication 1, caractérisé en ce que la première couche adhésive sensible à la pression (230) est appliquée sur le premier article (267), la seconde couche adhésive sensible à une pression (235) est appliquée sur le second article (268), et le revêtement central de séparation (220) est ensuite placé entre elles et fixé temporairement à la première et à la seconde couche adhésive sensible à une pression (230, 235).

3. Procédé selon la revendication 1, caractérisé en ce qu'une troisième couche adhésive (223) est appliquée au premier article (267), une première couche d'amortissement et de support (210) est fixée à la troisième couche adhésive (223) et la première couche adhésive sensible à une pression (290) est appliquée à la première couche d'amortissement et de support (210), une quatrième couche adhésive (225) étant appliquée sur le second article (268), une seconde couche amortissement et de support (215) étant fixée à la quatrième couche adhesive (225), la second couche adhésive sensible à une pression (295) étant appliquée à la seconde couche d'amortissement et de support (215), et le revêtement central de séparation (280) est disposé entre la première et la seconde couche adhésive sensible à une pression (290, 295) et est fixée temporairement à elles.

4. Procédé selon la revendication 1, caractérisé en ce qu'une troisième couche adhésive (223) est appliquée au premier article (267), une quatrième couche adhésive (225) est appliquée au second article (268), et un ensemble composite intermédiaire qui comprend le revêtement central de séparation (280) disposé entre la première et la seconde couche adhésive sensible à une pression (290, 295) et fixé de façon amovible à elles, chacune de ces première et seconde couches ayant une couche respective d'amortissement et de support (210, 215) qui lui est fixée, est placé entre la troisième et la quatrième couche adhésive (223, 225), et les couches d'amortissement et de support (210, 215) sont fixées à la troisième et la quatrième couche adhésive (223, 225).

5. Procédé selon l'une des revendications 3 et 4, caractérisé en ce que la troisième et la quatrième couche adhésive (223, 225) sont des couches d'un adhésif sensible à une pression.

6. Procédé selon l'une des revendications 3 et 4, caractérisé en ce que la troisième et la quatrième couche adhésive (223, 225) sont des couches adhésives permanentes.

7. Procédé de collage d'un premier article (267) sur un second, comprenant la disposition, sur le premier article (267), d'une structure composite adhésive sensible à la pression qui est destinée à être fixée au second article après enlèvement d'un revêtement externe de séparation (245) de la structure adhésive sensible à une pression afin qu'une liaison temporaire soit formée entre les articles, la structure composite adhésive sensible à une pression ayant plusieurs couches qui comprennent, en plus du revêtement externe de séparation, au moins une première et une seconde couche adhésive sensible à une pression (230, 235; 290, 295) ayant un revêtement central de séparation (220; 280) placé entre elles et fixé temporairement à elles, si bien que, après enlèvement du revêtement central de séparation (220, 280), une liaison permanente peut être réalisée entre les articles par mise en contact de la première et de la seconde couche adhésive sensible à une pression (230, 235; 290, 295) l'une avec l'autre, une couche au moins (230; 223) de la structure adhésive sensible à la pression étant appliquée sur le premier article (267) avant que ces autres couches y soient fixées.

8. Procédé selon la revendication 7, caractérisé en ce que la première couche adhésive sensible à une pression (230) est appliquée au premier article (267), la seconde couche adhésive sensible à une pression (235) est appliquée au revêtement externe de séparation (245), puis le revêtement central de séparation (220) est disposé entre ces couches et fixé de façon amovible à la première et à la seconde couche adhésive sensible à une pression (230, 235).

9. Procédé selon la revendication 7, caractérisé en ce qu'une troisième couche adhésive (223) est appliquée au premier article (267), une première couche d'amortissement et de support (210) est fixée à la troisième couche adhésive (223) et la première couche adhésive sensible à la pression (290) est appliquée à la première couche d'amortissement et de support (210), une quatrième couche adhésive sensible à une pression (225) est appliquée au revêtement externe de séparation (245), une seconde couche d'amortissement et de support (215) est fixée à la quatrième couche adhésive sensible à une pression (225) et la seconde couche adhésive sensible à une pression (295) est appliquée sur la seconde couche d'amortissement et de support (215), et le revêtement central de séparation (280) est disposé entre la première et la seconde couche adhésive sensible à une pression (290, 295) et est fixé temporairement à elles.

10. Procédé selon la revendication 7, caractérisé en ce qu'une troisième couche adhésive (223) est appliquée au premier article (267), une quatrième couche adhésive sensible à une pression (225) est appliquée au revêtement externe de séparation (245), et un ensemble composite intermédiaire, comportant le revêtement central de séparation (280) placé entre la première et la seconde couche adhésive sensible à une pression (290, 295) et fixé de façon temporaire à ces couches qui ont chacune une couche d'amortissement et de support (210, 215) qui lui est fixée, est placé entre la troisième et la quatriéme couche adhésive (223,

225), les couches d'amortissement et de support (210, 215) étant fixées à la troisième et la quatrième couche adhésive (223, 225).

11. Procédé selon l'une des revendications 9 et 10, caractérisé en ce que la troisième couche adhésive (223) est une couche d'un adhésif sensible à la pression.

12. Procédé selon l'une des revendications 9 et 10, caractérisé en ce que la troisième couche adhésive (223) est une couche adhésive permanente.

13. Procédé selon la revendication 7, caractérisé en ce que les couches (230, 220, 235, 245; 223, 210, 290, 280, 295, 215, 225, 245) de construction sensible à la pression sont appliquées successivement sur le premier article (267).

14. Procédé selon l'une quelconque des revendications 7 à 13, caractérisé en ce que le revêtement externe de séparation (245) est retiré de la structure sensible à la pression et la structure sensible à la pression est fixée au second article afin que la liaison temporaire soit effectuée entre les articles.

15. Procédé selon l'une quelconque des revendications 1 à 6 et 14, caractérisé en ce que le revêtement central de séparation (220; 280) est retiré, et la première et la seconde couche sensible à une pression (230, 235; 290, 295) sont mises en contact mutuel afin qu'elles forment une liaison permanente.

16. Structure composite adhésive sensible à une pression, comprenant un revêtement central de séparation (280) placé entre une première et une seconde couche adhésive sensible à une pression (290, 295) et fixé temporairement à ces couches, sur un premier et un second revêtement d'amortissement et de support (210, 215), le premier revêtement d'amortissement et de support (210) étant fixé de façon permanente par une couche adhésive (223) à un article et la seconde couche d'amortissement et de support (215) étant fixée par une couche adhésive supplémentaire (225) à une second article (268) ou à un revêtement externe de séparation (245).

17. Structure selon la revendication 16, caractérisée en ce que le second revêtement d'amortissement et de support (215) est fixé de façon permanente au second article (268) par la couche adhésive supplémentaire (225).

18. Structure selon l'une des revendications 16 et 17, caractérisée en ce qu'une couche de revêtement de séparation (281, 282) est placée sur chaque face du revêtement central de séparation (280).

19. Structure selon la revendication 18, caractérisée en ce qu'une couche de revêtement de séparation (281 ou 282) du revêtement central de séparation (280) adhère plus que l'autre couche afin qu'une séparation différentielle du revêtement central de séparation soit assurée entre la première et la seconde couche adhésive sensible à une pression (290, 295).

FIG. 1

FIG. 2

FIG. 3

267
221
220
222
268

230

235

**FIG. 4**

267
223
210
290
280
295
215
225
268

281

282

**FIG. 5**

FIG. 6

*mig be perm*

FIG. 7